# EUROPEAN PATENT SPECIFICATION

(11) **EP 4 072 929 B1**
(45) Date of publication and mention of the grant of the patent: **18.09.2024**
(21) Application number: 20823959.0
(22) Date of filing: 11.12.2020
(51) Int. Cl.: B62D 63/02, B62D 65/02, B62D 29/04, B62D 33/04

(54) **SUPERSTRUCTURE FOR A RESCUE VEHICLE AND METHOD FOR MANUFACTURING SUCH SUPERSTRUCTURE**
OBERBAU FÜR EIN RETTUNGSFAHRZEUG UND VERFAHREN ZUR HERSTELLUNG EINES SOLCHEN OBERBAUS
SUPERSTRUCTURE POUR UN VÉHICULE DE SAUVETAGE ET PROCÉDÉ DE FABRICATION D'UNE TELLE SUPERSTRUCTURE

(30) Priority: 11.12.2019 IT 201900023676
(43) Date of publication of application: 19.10.2022
(73) Proprietor: IVECO MAGIRUS AG, 89079 Ulm (DE)
(72) Inventor: FITZ, Harald, 89079 Ulm (DE)
(74) Representative: Studio Torta S.p.A.
(86) International application number: PCT/IB2020/061824
(87) International publication number: WO 2021/116998

(56) References cited:
- WO-A1-2018/172530
- GB-A- 2 081 331
- US-A- 5 785 372
- US-A1- 2017 166 262

## Description

### TECHNICAL FIELD

The present invention concerns a vehicular superstructure, in particular a superstructure for a rescue vehicle and a method for manufacturing this latter.

### BACKGROUND OF THE INVENTION

As known, all vehicles comprise a superstructure that defines a common framework for allowing the support and the fixation of all the other vehicular elements.

A rescue vehicle obviously needs a peculiar superstructure that needs to be designed according to the specific use of the rescue vehicle and that generally requires to support high loads and many different typologies of equipment modules.

Accordingly, it is currently known to produce superstructures designed for a very specific use. Such superstructure is normally mounted by welding different metal sheets or profiles or by screwing these latter and then, when completed, by mounting the different equipment modules on the superstructure

However, it is clear that such self-containing superstructure has a considerable dimension and therefore cannot be displaced easily in the manufacturing workplace. Accordingly, the equipment modules are usually mounted singularly at a common workpiece. Such manufacturing method clearly increases the manufacturing time and therefore the global costs for providing the vehicle to the client.

Therefore, the need is felt to reduce manufacturing time and costs for producing a superstructure of a rescue vehicle, while, at the same time, maintaining the high requested level of personalization.

Examples of known structures for vehicles are disclosed in publications US5785372 A, US2017166262 A1, GB2081331 A or WO2018172530 A1.

An aim of the present invention is to satisfy the above mentioned needs in a cost effective way.

### SUMMARY OF THE INVENTION

The aforementioned aim is reached by a superstructure and a manufacturing method thereof as claimed in the appended set of claims.

### BRIEF DESCRIPTION OF DRAWINGS

For a better understanding of the present invention, a preferred embodiment is described in the following, by way of a non-limiting example, with reference to the attached drawings wherein:

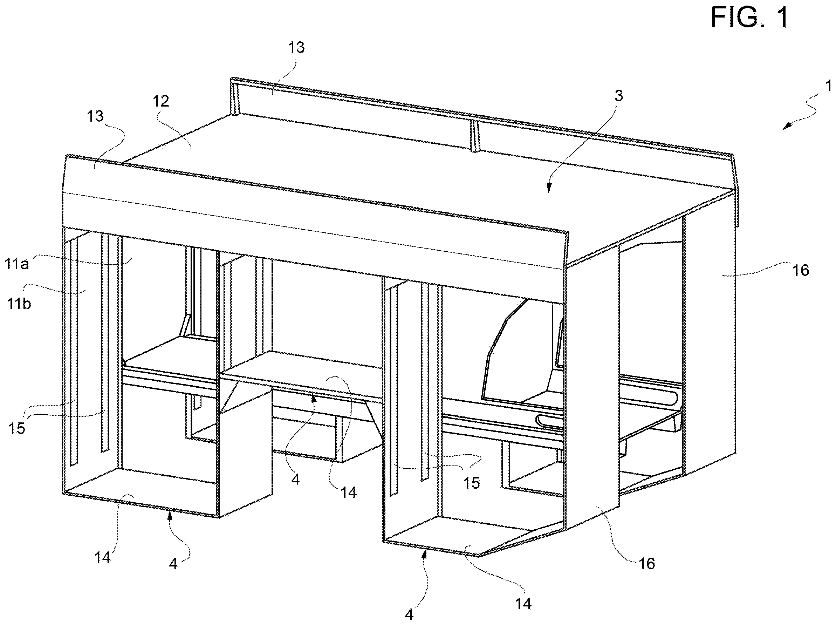

Figure 1 is a perspective view showing a superstructure for a rescue vehicle according to the present invention; and

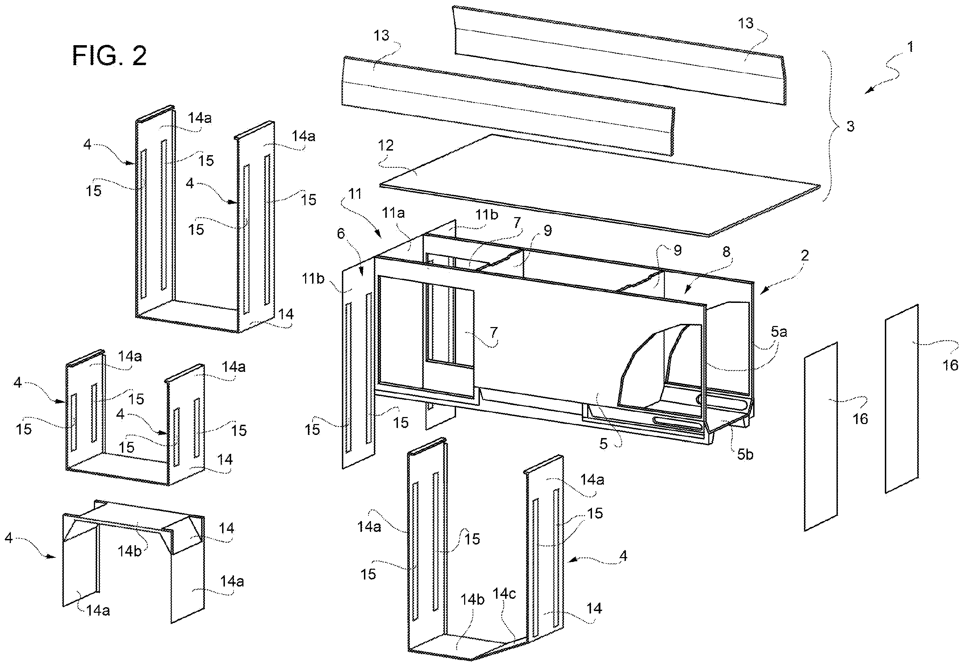

• Figure 2 is an exploded perspective view showing the superstructure of figure 1, with parts removed for sake of clarity.

### DETAILED DESCRIPTION OF THE INVENTION

In the following, for sake of clarity, a three axis reference will be used to define the position of the different elements, parts and portions comprised by superstructure 1 wherein axis X corresponds to a longitudinal axis of superstructure 1, axis Y corresponds to a vertical axis and axis Z corresponds to a transversal axis of the superstructure 1; clear, the three axis are each perpendicular to the other two axis.

Reference 1 globally indicates a superstructure 1 for a rescue vehicle according to the invention comprising essentially a torsionally rigid central body 2, a roof 3 and a plurality of lateral compartments 4 attached to the torsional rigid central body 2 and/or to roof 3.

In greater particular, the central body 2 comprises a longitudinal portion 5 and a terminal portion 6 connected to the longitudinal portion 5 at an extremity thereof along longitudinal axis X.

The longitudinal portion 5 has advantageously at least a U-shaped cross-section in a transversal (YZ) plane and, according to the described embodiment, the transversal portion of the U is on the bottom, i.e. in which the U is open upwards. The longitudinal portion can also be rectangular, by closing the aforementioned defined U-shaped cross-section or by providing a rectangular one-piece cross section.

Accordingly, the longitudinal portion comprises essentially a pair of lateral walls 5a connected to a bottom plate 5b. Preferably, walls 5a, 5b are all realized as a single piece or by welding different plates together. Such plates can be in metal, plastic or sandwich composite materials.

Preferably, lateral walls 5a can be provided with openings 7 configured to allow the access to an inner space 8 defined by the longitudinal portion 5, i.e. to the space 8 comprised between the lateral walls 5a and the bottom wall 5b. Usually, in such inner space 8 are housed tanks or pumping/compression means for operating the different modules of the vehicle.

Furthermore, longitudinal portion 5 may be provided with separation walls 9 housed in the inner space 8 and configured to define sub-compartments into inner space 8 and , at the same time, strengthen the longitudinal portion 8 to the torque about axis X. In the described embodiment, the separation walls 9 are realized as plate walls parallel to transversal (YZ) plane, connected to lateral and bottom walls 5a, 5b and dividing the space 8 into three sub-compartments.

In detail, according to the shown embodiment, space 8 is divided into three sub-compartments wherein the one nearest to terminal portion 6 is accessible from openings 7 realized into lateral walls 5b while the remaining sub-compartments are not accessible by such openings (e.g. may be used for storing tanks or could create the liquid tank by themselves).

The terminal portion 6 essentially comprises a plate wall 11 comprising a central portion 11a configured to match with the U-shape of the extremity of the longitudinal portion and fixed to this latter, e.g. by screw, welding or gluing. The plate wall 11 further comprises a pair of lateral portions 11b extending parallel to vertical axis beneath with respect to the bottom wall 5b of the longitudinal portion and extending parallel to transversal (YZ) plane from central portion 11b.

Roof 3 essentially comprises a flat plate 12 having an extension along transversal axis Z equal to the extension of terminal portion 6 of central body 2 and an extension along longitudinal axis X equal to the extension of longitudinal portion 5 of central body 2. Flat plate 12 is a substantially flat wall of material and can be welded or screwed to central body 2 along the top edges of longitudinal portion 5 and terminal portion 6. Preferably plate 12 is metallic.

Roof 6 further comprises a parapet 13 configured to surround at least a portion of the perimeter of the flat plate 12 and extending vertically above and beneath of this latter.

According to the embodiment of the present disclosure, parapet 13 is provided only along longitudinal edges of flat plate 12 and comprises a double inclination wall Such double inclination wall defines a first inclination extending from the edge of the main plate above a central portion of this latter and a second inclination symmetrically opposite to the aforementioned first inclination.

Lateral compartments 4 may be defined in several ways to define a space for arranging the different operative equipment of the rescue vehicle. Advantageously, they can be made thanks to a single plate 14, bent to define a suitable shape and preferably realized in metallic material. Such defined compartment may be fixed to the roof 13 and/or to the central portion2 via screws,by welding or glueing.

In the disclosed embodiment, such single metal plate 14 is bent so that defines a substantially U-shape in a longitudinal (XY) plane, e.g. comprising a pair of lateral walls 14a and a terminal wall 14b or a pair of lateral walls 14a, a terminal wall 14b and at least a joint wall 14c connecting the terminal wall 14b with one of lateral walls 14a. The combination of compartments 14 give the structure the final desired strength.

Such modules may be designed in shape and dimensions according to the specific use of the rescue vehicle and may be provided symmetrically with respect to longitudinal axis X to both sides of central portion 2 or in a different manner according to the design requests.

Advantageously, both central portion 2 and lateral compartments 4 may be provided with grooves 15, e.g. vertical openings, configured to allow the passage of cables/wires between the different spaces delimited by central portion 2 and lateral compartments 4, to allow the mounting of shelves continuously and to allow to fix material inside the compartments.

In particular, in the defined embodiment, grooves 15 are provided in the lateral walls 11b of the terminal portion 6 of the central portion 2 extending from all the length of these latter along vertical axis Y and in at least some the lateral walls 14a of each compartment 4, extending from all the length of these latter along vertical axis Y. In greater detail and preferably, two grooves 15 parallel to vertical axis Y are provided in each of the aforementioned elements.

Superstructure 1 is further preferably provided with covers 16 configured to be attached, e.g. by mechanical coupling such as screws or bolted, to lateral compartments or central portion 2 to close some open portions such as openings or grooves 15.

The present invention also relates to a method for manufacturing a superstructure 1 of a rescue vehicle as defined above and comprising the following phases:
- Separately assembling a central portion 2, a roof 3 and lateral compartments 4;
- Providing, separately, each among central portion 2, a roof 3 and lateral compartments 4 with the respective operative elements;
- Fixing the roof 3 to the central portion 2; and
- Fixing the lateral compartments 4 to the central portion 2 and/or roof 3.

In view of the foregoing, the advantages of a superstructure 1 and a related manufacturing method according to the invention are apparent.

The proposed structure can be prefabricated in different standardized forms, thereby providing economies of scale in manufacturing different typologies of rescue vehicles.

Furthermore, the proposed superstructure provide a sufficiently rigid structure which weight less and which allows to achieve a greater usable space with respect to the known one.

Moreover, it is possible to optimize the manufacturing process since the different portions of the superstructure can be realized separately with some operational elements already mounted therein. Accordingly, the different portions can be manufactured in parallel thereby reducing manufacturing process time.

Furthermore, since the different portions can be mounted at smaller workbenches, the space necessary to manufacture the vehicle is reduced.

Both the reduction of time and of used space allows a reduction of manufacturing costs of a rescue vehicle.

It is clear that modifications can be made to the described superstructure 1 and a related manufacturing method which do not extend beyond the scope of protection defined by the claims.

In particular, it is clear that the shapes defined in the exemplarily embodiment may be varied according to the request of the rescue vehicle, even if maintaining the essential elements as defined by the claims.

For sake of example, lateral compartments 4 may have a different cross-section or central portion 2 may be provided with more compartments of space 8 or the presence or shape of parapet 13 may be varied.

## Claims

1. Superstructure (1) for a rescue vehicle comprising:
• a central portion (2) provided with a longitudinal portion (5) extending along a longitudinal axis (X) and having at least a U-shaped cross section in a transversal plane and a terminal plate (6) extending in said transversal plane beyond the cross-section defined by the longitudinal portion (5) and coupled to an extremity of the latter;
• a roof (3) configured to be connected to said central portion (2) and having a length equal to the longitudinal extension of said central portion (2) and a width equal to the transversal extension of said terminal plate (6); and
• a plurality of lateral compartment (4) configured to be connected to said central portion (2) and/or said roof (3),
**characterized in that** said longitudinal portion (5) comprises a pair of lateral walls (5a) and a bottom wall (5b) enclosing together a space (8), said longitudinal portion (5) being provided with a plurality of openings (7) realized in said lateral walls (5a) and configured to allow the access to said space (8).

2. Superstructure according to claim 1, wherein said central portion (2) comprises separation walls (9) housed in said space (8) and connected to said lateral walls (5a) and a bottom wall (5b) to divide said space (8) into different sub-compartments.

3. Superstructure according to any of claims 1 or 2, wherein said terminal portion (6) comprises a plate wall (11) provided with a central portion (11a) having the same shape of the cross-section of said longitudinal portion (5) and a pair of lateral portions (11b) extending laterally from said central portion (11a) along a transversal axis (Z9 and vertically beneath said bottom wall (5b) of said longitudinal portion (5) along a vertical axis (Y).

4. Superstructure according to any of the preceding claims, wherein said roof (3) comprises a flat plate (12) configured to be coupled with said central portion (2) and a parapet (13) configured to surround at least part of the perimeter of said flat plate (12).

5. Superstructure according to any of the preceding claims, wherein said lateral compartment (4) have a U-shaped cross-section in a longitudinal plane.

6. Superstructure according to any of the preceding claims, wherein said lateral compartment (4) are realized via a single bent metal sheet.

7. Superstructure according to any of the preceding claims wherein said terminal plate (6) and said lateral compartments (4) are provided with grooves (15) configured to allow the passage of cable/wires within different spaces delimited by said central portion (2) and said lateral compartments (4).

8. Superstructure according to any of the preceding claims, further comprising covers (16) configured to couple with said central portion (2) and/or said lateral compartments (4) to close the different openings realized in these latter.

9. Method for manufacturing a superstructure (1) for a rescue vehicle as defined in the preceding claims and comprising the following phases:
• Separately assembling said central portion (2), said roof (3) and said lateral compartments (4);
• Providing, separately, each among said central portion (2), said roof (3) and said lateral compartments (4) with the respective operative elements;
• Fixing said roof (3) to said central portion (2); and
• Fixing said lateral compartments (4) to said central portion (2) and/or said roof (3).

10. Rescue vehicle comprising a superstructure according to any of claims 1 to 8.

## Patentansprüche

1. Oberbau (1) für ein Rettungsfahrzeug, umfassend:
- einen zentralen Teil (2), der mit einem Längsteil (5), der sich entlang einer Längsachse (X) erstreckt und zumindest einen U-förmigen Querschnitt in einer Querebene aufweist, und einer Abschlussplatte (6) versehen ist, die sich in der Querebene über den durch den Längsteil (5) definierten Querschnitt hinaus erstreckt und an ein Ende desselben gekoppelt ist,
- ein Dach (3), dazu ausgebildet, mit dem zentralen Teil (2) verbunden zu werden und welches eine Länge gleich der Längserstreckung des zentralen Teils (2) und eine Breite gleich der Quererstreckung der Abschlussplatte (6) aufweist, und
- eine Mehrzahl seitlicher Abteile (4), dazu ausgebildet, mit dem zentralen Teil (2) und/oder dem Dach (3) verbunden zu werden,
**dadurch gekennzeichnet, dass** der Längsteil (5) ein Paar von Seitenwänden (5a) und eine Bodenwand (5b) umfasst, die gemeinsam einen Raum (8) umschließen, wobei der Längsteil (5) mit einer Mehrzahl von Öffnungen (7) versehen ist, die in den Seitenwänden (5a) vorgesehen und dazu ausgebildet sind, den Zugang zum Raum (8) zu ermöglichen.

2. Oberbau gemäß Anspruch 1, bei welchem der zentrale Teil (2) Trennwände (9) umfasst, die in dem Raum (8) untergebracht sind und mit den Seitenwänden (5a) und einer Bodenwand (5b) verbunden sind, um den Raum (8) in Unterabteile zu unterteilen.

3. Oberbau gemäß einem der Ansprüche 1 oder 2, bei welchem der Abschlussteil (6) eine Plattenwand (11), die mit einem zentralen Teil (11a), die die gleiche Form wie der Querschnitt des Längsteils (5) aufweist, und einem Paar von Seitenteilen (11b) versehen ist, die sich seitlich von dem zentralen Teil (11a) entlang einer Querachse (Z9) und vertikal unterhalb der Bodenwand (5b) des Längsteils (5) entlang einer vertikalen Achse (Y) erstrecken.

4. Oberbau gemäß einem der vorhergehenden Ansprüche, bei welchem das Dach (3) eine flache Platte (12) umfasst, dazu ausgebildet, mit dem zentralen Teil (2) gekoppelt zu werden, und eine Brüstung (13), dazu ausgebildet, zumindest einen Teil des Umfangs der flachen Platte (12) zu umgeben.

5. Oberbau gemäß einem der vorhergehenden Ansprüche, bei welchem die seitlichen Abteile (4) einen U-förmigen Querschnitt in einer Längsebene aufweisen.

6. Oberbau gemäß einem der vorhergehenden Ansprüche, bei welchem die seitlichen Abteile (4) durch ein einziges gebogenes Metallblech gebildet werden.

7. Oberbau gemäß einem der vorhergehenden Ansprüche, bei welchem die Abschlussplatte (6) und die seitlichen Abteile (4) mit Nuten (15) versehen sind, dazu ausgebildet, den Durchlass von Kabeln/Drähten innerhalb unterschiedlicher Räume zu ermöglichen, die durch den zentralen Teil (2) und die seitlichen Abteile (4) begrenzt werden.

8. Oberbau gemäß einem der vorhergehenden Ansprüche, ferner umfassend Abdeckungen (16), ausgebildet zur Kopplung mit dem zentralen Teil (2) und/oder den seitlichen Abteilen (4) zum Schließen der unterschiedlichen Öffnungen, die darin vorgesehen sind.

9. Verfahren zur Herstellung eines Oberbaus (1) eines Rettungsfahrzeugs gemäß der vorhergehenden Ansprüche, umfassend die folgenden Schritte:
- Getrennter Zusammenbau des zentralen Teils (2), des Dachs (3) und der seitlichen Abteile (4);
- Getrennte Bereitstellung von jedem von dem zentralen Teil (2), dem Dach (3) und der seitlichen Abteile (4) mit den jeweilen Betriebselementen;
- Befestigung des Dachs (3) an dem zentralen Teil (2); und
- Befestigung der seitlichen Abteile (4) an dem zentralen Teil (2) und/oder dem Dach (3).

10. Rettungsfahrzeug, umfassend einen Oberbau gemäß einem der Ansprüche 1 bis 8.

## Revendications

1. Superstructure (1) pour un véhicule de sauvetage comprenant :
une partie centrale (2) prévue avec une partie longitudinale (5) s'étendant le long d'un axe longitudinal (X) et ayant au moins une section transversale en forme de U dans un plan transversal et une plaque terminale (6) s'étendant dans ledit plan transversal au-delà de la section transversale définie par la partie longitudinale (5) et couplée à une extrémité de cette dernière ;
un toit (3) configuré pour être raccordé à ladite partie centrale (2) et ayant une longueur égale à l'extension longitudinale de ladite partie centrale (2) et une largeur égale à l'extension transversale de ladite plaque terminale (6) ; et
une pluralité de compartiments latéraux (4) configurés pour être raccordés à ladite partie centrale (2) et/ou audit toit (3),
**caractérisée en ce que** ladite partie longitudinale (5) comprend une paire de parois latérales (5a) et une paroi inférieure (5b) enfermant ensemble un espace (8), ladite partie longitudinale (5) étant prévue avec une pluralité d'ouvertures (7) réalisées dans lesdites parois latérales (5a) et configurées pour permettre l'accès audit espace (8).

2. Superstructure selon la revendication 1, dans laquelle ladite partie centrale (2) comprend des parois de séparation (9) logées dans ledit espace (8) et raccordées auxdites parois latérales (5a) et à une paroi inférieure (5b) pour diviser ledit espace (8) en différents sous-compartiments.

3. Superstructure selon l'une quelconque des revendications 1 ou 2, dans laquelle ladite partie terminale (6) comprend une paroi de plaque (11) prévue avec une partie centrale (11a) ayant la même forme de la section transversale de ladite partie longitudinale (5) et une paire de parties latérales (11b) s'étendant latéralement à partir de ladite partie centrale (11a) le long d'un axe transversal (Z9 et verticalement au-dessous de ladite paroi inférieure (5b) de ladite partie longitudinale (5) le long d'un axe vertical (Y).

4. Superstructure selon l'une quelconque des revendications précédentes, dans laquelle ledit toit (3) comprend une plaque plate (12) configurée pour être couplée avec ladite partie centrale (2) et un parapet (13) configuré pour entourer au moins une partie du périmètre de ladite plaque plate (12).

5. Superstructure selon l'une quelconque des revendications précédentes, dans laquelle ledit compartiment latéral (4) a une section transversale en forme de U dans un plan longitudinal.

6. Superstructure selon l'une quelconque des revendications précédentes, dans laquelle ledit compartiment latéral (4) est réalisé via une feuille métallique unique courbée.

7. Superstructure selon l'une quelconque des revendications précédentes, dans laquelle ladite plaque terminale (6) et lesdits compartiments latéraux (4) sont prévus avec des gorges (15) configurées pour permettre le passage du câble/des fils dans des espaces différents délimités par ladite partie centrale (2) et lesdits compartiments latéraux (4).

8. Superstructure selon l'une quelconque des revendications précédentes, comprenant en outre des couvercles (16) configurés pour se coupler avec ladite partie centrale (2) et/ou lesdits compartiments latéraux (4) afin de fermer les différentes ouvertures réalisées dans ces derniers.

9. Procédé pour fabriquer une superstructure (1) pour un véhicule de sauvetage selon les revendications précédentes et comprenant les étapes suivantes :
assembler séparément ladite partie centrale (2), ledit toit (3) et lesdits compartiments latéraux (4) ;
prévoir, séparément, chacun parmi ladite partie centrale (2), ledit toit (3) et lesdits compartiments latéraux (4) avec les éléments opérationnels respectifs ;
fixer ledit toit (3) sur ladite partie centrale (2) ; et
fixer lesdits compartiments latéraux (4) à ladite partie centrale (2) et/ou audit toit (3).

10. Véhicule de sauvetage comprenant une superstructure selon l'une quelconque des revendications 1 à 8.
